# EUROPEAN PATENT APPLICATION

(11) **EP 4 130 443 A1**
(43) Date of publication of application: **08.02.2023**
(21) Application number: 22183462.5
(22) Date of filing: 07.07.2022
(51) Int. Cl.: F01D 25/30

(54) **EXHAUST DIFFUSER WITH COLLECTOR**

(30) Priority: 29.07.2021 US 202117388438
(71) Applicant: Solar Turbines Incorporated, San Diego, CA 92101 (US)
(72) Inventor: SIOREK, Michal, Carlsbad, 92010 (US); HU, Gusheng, San Diego, 92127 (US)
(74) Representative: Boult Wade Tennant LLP

(57) **Abstract**

An exhaust system (150) of a turbine (140) typically includes an exhaust collector (154) that turns the axial flow of exhaust, output by the turbine (140), radially outward, with the intent of diverting the flow up an exhaust stack. However, the width of the exhaust collector (154) may be limited by packaging engineering, which can decrease the efficiency of the exhaust system (150). Accordingly, an exhaust collector (154) is disclosed that utilizes non-cylindrical conical shapes in an exhaust diffuser (152) to maximize volume and reduce velocity in the exhaust collector (154), to compensate for the decrease in efficiency caused by a reduced width of the exhaust collector (154).

## Description

### Technical Field

The embodiments described herein are generally directed to an exhaust collector, and, more particularly, to a design for a narrow, high performance exhaust collector (e.g., in a gas turbine engine).

### Background

An exhaust system of a turbine typically includes an exhaust collector that turns the axial flow of exhaust, output by the turbine, radially outward, with the intent of diverting the flow up an exhaust stack. An exhaust collector should be designed to reduce the velocity of exhaust within the exhaust system, in order to increase pressure through the upstream turbine.

A highly efficient exhaust system (e.g., for a gas turbine engine) requires an exhaust collector that contains a large volume. This is typically achieved by maximizing the width of the exhaust collector. However, to reduce shipping costs and logistics, packaging engineering prescribes a limitation on the width of an exhaust collector. For instance, the width of the exhaust collector may be limited by the width of the trailer bed used to transport the exhaust collector.

U.S. Patent Pub. No. 2017/0241294 describes an exemplary exhaust collector. However, this exhaust collector was not designed to satisfy a narrow width requirement, while maintaining high efficiency. The present disclosure is directed toward overcoming one or more of the problems discovered by the inventors.

### Summary

An embodiment of an exhaust diffuser is disclosed that comprises: a forward shroud section and an aft shroud section, wherein the shroud cone encircles an upstream portion of the hub to form an annular flow path between the shroud cone and the upstream portion of the hub, wherein the aft shroud section is upstream from the aft hub section, wherein a diameter of the aft shroud section increases in a downstream direction along a longitudinal axis according to a radius of curvature, such that the aft shroud section flares radially outward in the downstream direction, and wherein a cross-sectional area of the annular flow path between at least the aft shroud section and the hub increases in the downstream direction.

An embodiment of an exhaust outlet is disclosed that comprises: an exhaust collector; and an exhaust diffuser that opens into an interior of the exhaust collector, wherein the exhaust diffuser includes a hub that comprises a forward hub section and an aft hub section, and a shroud cone that comprises a forward shroud section and an aft shroud section, wherein the shroud cone encircles an upstream portion of the hub to form an annular flow path between the shroud cone and the upstream portion of the hub, wherein the aft shroud section is upstream from the aft hub section, wherein a diameter of the aft shroud section increases in a downstream direction along a longitudinal axis according to a radius of curvature, such that the aft shroud section flares radially outward in the downstream direction, and wherein a cross-sectional area of the annular flow path between at least the aft shroud section and the hub increases in the downstream direction.

An embodiment of a gas turbine engine is disclosed that comprises: a compressor; a combustor downstream from the compressor; a turbine downstream from the combustor; and an exhaust outlet downstream from the turbine, wherein the exhaust outlet includes an exhaust collector, and an exhaust diffuser that opens into an interior of the exhaust collector, wherein the exhaust diffuser comprises a hub that includes a forward hub section and an aft hub section, and a shroud cone that includes a forward shroud section and an aft shroud section, wherein the shroud cone encircles an upstream portion of the hub to form an annular flow path between the shroud cone and the upstream portion of the hub, wherein the aft shroud section is upstream from the aft hub section, wherein a diameter of the aft shroud section increases in a downstream direction along a longitudinal axis according to a radius of curvature, such that the aft shroud section flares radially outward in the downstream direction, and wherein a cross-sectional area of the annular flow path between at least the aft shroud section and the hub increases in the downstream direction.

### Brief Description of the Drawings

The details of embodiments of the present disclosure, both as to their structure and operation, may be gleaned in part by study of the accompanying drawings, in which like reference numerals refer to like parts, and in which:
FIG. 1 illustrates a schematic diagram of a gas turbine engine, according to an embodiment;
FIG. 2 illustrates a schematic diagram of an exhaust outlet, according to an embodiment;
FIG. 3 illustrates a transparent view of a portion of an exhaust outlet down a longitudinal axis, according to an embodiment; and
FIG. 4 illustrates a perspective view of an exhaust outlet, according to an embodiment.

### Detailed Description

The detailed description set forth below, in connection with the accompanying drawings, is intended as a description of various embodiments, and is not intended to represent the only embodiments in which the disclosure may be practiced. The detailed description includes specific details for the purpose of providing a thorough understanding of the embodiments. However, it will be apparent to those skilled in the art that embodiments of the invention can be practiced without these specific details. In some instances, well-known structures and components are shown in simplified form for brevity of description.

For clarity and ease of explanation, some surfaces and details may be omitted in the present description and figures. In addition, references herein to "upstream" and "downstream" or "forward" and "aft" are relative to the flow direction of the primary gas (e.g., air) used in the combustion process, unless specified otherwise. It should be understood that "upstream," "forward," and "leading" refer to a position that is closer to the source of the primary gas or a direction towards the source of the primary gas, and "downstream," "aft," and "trailing" refer to a position that is farther from the source of the primary gas or a direction that is away from the source of the primary gas. Thus, a trailing edge or end of a component (e.g., a turbine blade) is downstream from a leading edge or end of the same component. Also, it should be understood that, as used herein, the terms "side," "top," "bottom," "front," "rear," "above," "below," and the like are used for convenience of understanding to convey the relative positions of various components with respect to each other, and do not imply any specific orientation of those components in absolute terms (e.g., with respect to the external environment or the ground).

It should also be understood that the various components illustrated herein are not necessarily drawn to scale. In other words, the features disclosed in various embodiments may be implemented using different relative dimensions within and between components than those illustrated in the drawings.

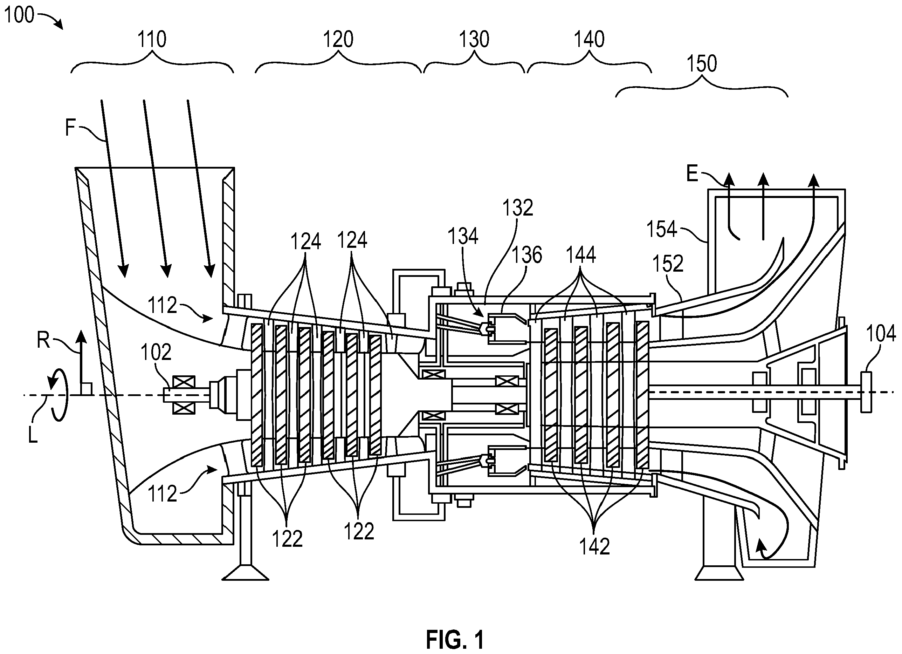

FIG. 1 illustrates a schematic diagram of a gas turbine engine 100, according to an embodiment. Gas turbine engine 100 comprises a shaft 102 with a central longitudinal axis L. A number of other components of gas turbine engine 100 are concentric with longitudinal axis L and may be annular to longitudinal axis L. A radial axis may refer to any axis or direction that radiates outward from longitudinal axis L at a substantially orthogonal angle to longitudinal axis L, such as radial axis R in FIG. 1. Thus, the term "radially outward" should be understood to mean farther from or away from longitudinal axis L, whereas the term "radially inward" should be understood to mean closer or towards longitudinal axis L. As used herein, the term "axial" will refer to any axis or direction that is substantially parallel to longitudinal axis L.

In an embodiment, gas turbine engine 100 comprises, from an upstream end to a downstream end, an inlet 110, a compressor 120, a combustor 130, a turbine 140, and an exhaust outlet 150. In addition, the downstream end of gas turbine engine 100 may comprise a power output coupling 104. One or more, including potentially all, of these components of gas turbine engine 100 may be made from stainless steel and/or durable, high-temperature materials known as "superalloys." A superalloy is an alloy that exhibits excellent mechanical strength and creep resistance at high temperatures, good surface stability, and corrosion and oxidation resistance. Examples of superalloys include, without limitation, Hastelloy, Inconel, Waspaloy, Rene alloys, Haynes alloys, Incoloy, MP98T, TMS alloys, and CMSX single crystal alloys.

Inlet 110 may funnel a working fluid F (e.g., the primary gas, such as air) into an annular flow path 112 around longitudinal axis L. Working fluid F flows through inlet 110 into compressor 120. While working fluid F is illustrated as flowing into inlet 110 from a particular direction and at an angle that is substantially orthogonal to longitudinal axis L, it should be understood that inlet 110 may be configured to receive working fluid F from any direction and at any angle that is appropriate for the particular application of gas turbine engine 100. While working fluid F will primarily be described herein as air, it should be understood that working fluid F could comprise other fluids, including other gases.

Compressor 120 may comprise a series of compressor rotor assemblies 122 and stator assemblies 124. Each compressor rotor assembly 122 may comprise a rotor disk that is circumferentially populated with a plurality of rotor blades. The rotor blades in a rotor disk are separated, along the axial axis, from the rotor blades in an adjacent disk by a stator assembly 124. Compressor 120 compresses working fluid F through a series of stages corresponding to each compressor rotor assembly 122. The compressed working fluid F then flows from compressor 120 into combustor 130.

Combustor 130 may comprise a combustor case 132 that houses one or more, and generally a plurality of, fuel injectors 134. In an embodiment with a plurality of fuel injectors 134, fuel injectors 134 may be arranged circumferentially around longitudinal axis L within combustor case 132 at equidistant intervals. Combustor case 132 diffuses working fluid F, and fuel injector(s) 134 inject fuel into working fluid F. This injected fuel is ignited to produce a combustion reaction in one or more combustion chambers 136. The combusting fuel-gas mixture drives turbine 140.

Turbine 140 may comprise one or more turbine rotor assemblies 142 and stator assemblies 144 (e.g., nozzles). Each turbine rotor assembly 142 may correspond to one of a plurality or series of stages. Turbine 140 extracts energy from the combusting fuel-gas mixture as it passes through each stage. The energy extracted by turbine 140 may be transferred (e.g., to an external system) via power output coupling 104.

The exhaust E from turbine 140 may flow into exhaust outlet 150. Exhaust outlet 150 may comprise an exhaust diffuser 152, which diffuses exhaust E, and an exhaust collector 154 which collects, redirects, and outputs exhaust E. It should be understood that exhaust E, output by exhaust collector 154, may be further processed, for example, to reduce harmful emissions, recover heat, reduce noise, and/or the like. In addition, while exhaust E is illustrated as flowing out of exhaust outlet 150 in a specific direction and at an angle that is substantially orthogonal to longitudinal axis L, it should be understood that exhaust outlet 150 may be configured to output exhaust E towards any direction and at any angle that is appropriate for the particular application of gas turbine engine 100.

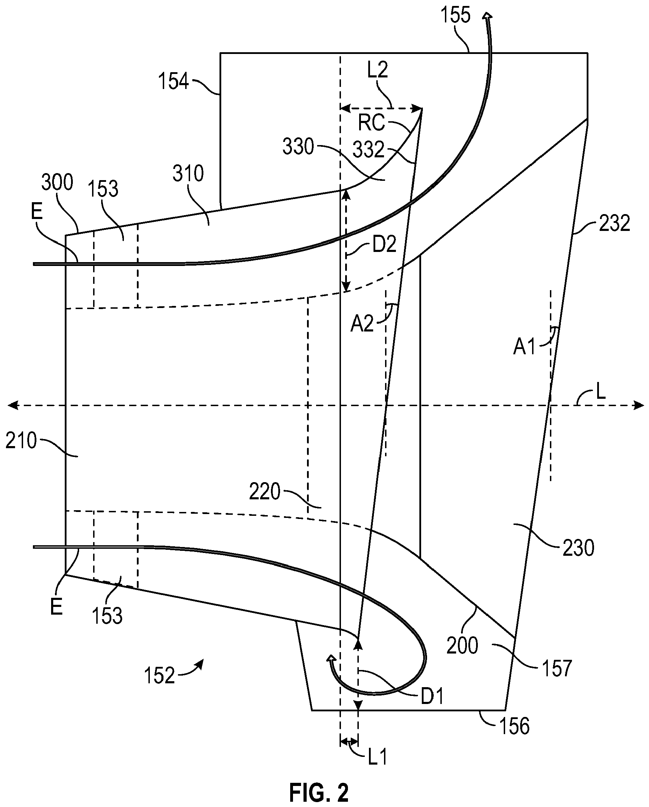

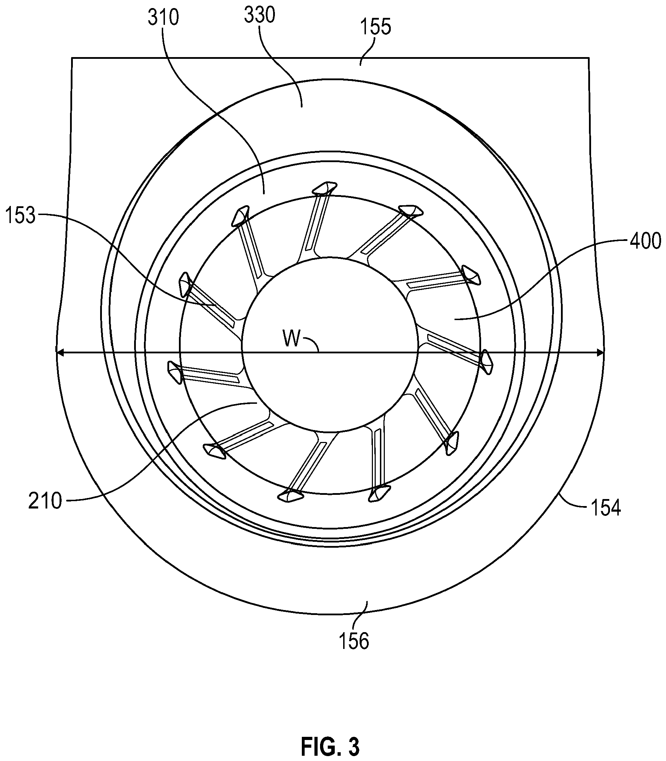

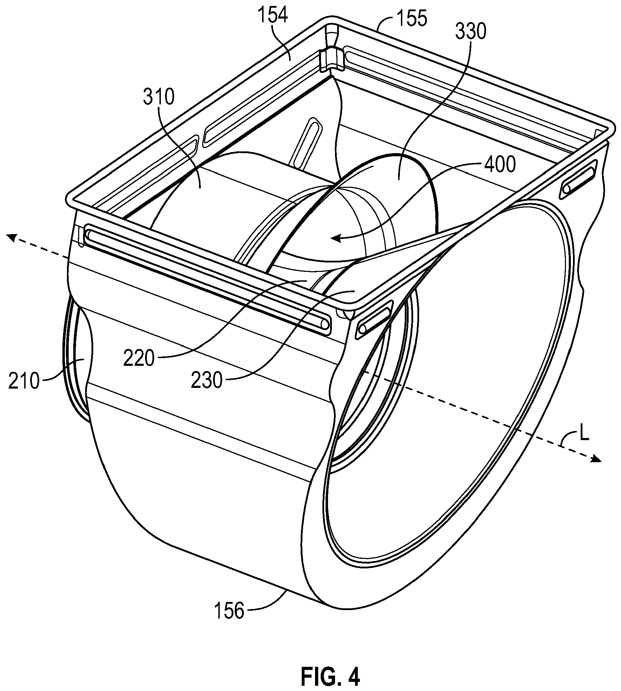

FIG. 2 illustrates a schematic diagram of exhaust outlet 150, according to an embodiment. Exhaust diffuser 152 comprises a hub 200 and a shroud cone 300. It should be understood that both hub 200 and shroud cone 300 are annular around longitudinal axis L. In addition hub 200 and shroud cone 300 may be concentric around longitudinal axis L, with shroud cone 300 encircling hub 200, so as to form an annular flow path (e.g., 400 in FIGS. 3 and 4) between the exterior surface of hub 200 and the interior surface of shroud cone 300. Shroud cone 300 may be connected to hub 200 by a plurality of struts 153, which support shroud cone 300 around hub 200. Struts 153 may be spaced at equidistant intervals around the entire circumference of hub 200, and may be placed at any location along longitudinal axis L between the inlet of exhaust diffuser 152 and the outlet of exhaust diffuser 152. In an embodiment, the downstream end of exhaust diffuser 152 opens into an interior of exhaust collector 154, which may comprise an open end 155, with an exit, and a closed end 156, such that the annular flow path ends in the interior of exhaust collector 154. Notably, open end 155 and closed end 156 may (e.g., orthogonally) intersect a radial axis that extends orthogonally through longitudinal axis L.

Along longitudinal axis L, from upstream to downstream, hub 200 may comprise a forward hub section 210, a transitional hub section 220, and an aft hub section 230. In an alternative embodiment, transitional hub section 220 may be omitted, such that aft hub section 230 extends directly from the downstream end of forward hub section 210. Forward hub section 210 may be substantially cylindrical, or may be frustum-shaped such that the diameter of forward hub section 210 increases from the upstream end to the downstream end. Transitional hub section 220 may be substantially frustum-shaped or may comprise the shape of a flared frustum that curves radially outward from the upstream end to the downstream end according to a radius of curvature. Aft hub section 230 may be substantially frustum-shaped or may comprise the shape of a flared frustum that curves radially outward from the upstream end to the downstream end according to a radius of curvature. In any case, the diameter of aft hub section 230 (and potentially transitional hub section 220) may increase in a downstream direction along longitudinal axis L. In an alternative embodiment, hub 200 may be substantially cylindrical, such that the diameters of forward hub section 210, transitional hub section 220, and aft hub section 230 are substantially identical. In yet another alternative embodiment, the diameter of hub 200 may decrease in the downstream direction along longitudinal axis L.

In an embodiment, the downstream end of aft hub section 230, which is referred to herein as hub backwall 232, may be angled at an angle A1 with respect to a radial axis that is orthogonal to longitudinal axis L. Angle A1 may be between 5 to 15 degrees, and preferably between 10 and 12.5 degrees. As a result, aft hub section 230 is not symmetric about the longitudinal axis L, and the length of aft hub section 230, parallel to longitudinal axis L, may be shorter on one side of longitudinal axis L than on an opposing side of longitudinal axis L. For example, the length of the side of aft hub section 230 that is opposite the exit of exhaust outlet 150 may be shorter than the length of the side of aft hub section 230 that faces the exit of exhaust outlet 150 (i.e., on open end 155). Alternatively, Angle A1 may be 0 degrees, such that hub backwall 232 is not angled with respect to the radial axis, and aft hub section 230 is symmetric around longitudinal axis L and of uniform length along longitudinal axis L.

Along longitudinal axis L, from upstream to downstream, shroud cone 300 may comprise a forward shroud section 310 and an aft shroud section 330. In an alternative embodiment, shroud cone 300 could comprise a transitional shroud section between forward shroud section 310 and aft shroud section 330. Forward shroud section 310 may be substantially cylindrical, or may be frustum-shaped such that the diameter of forward shroud section 310 increases from the upstream end to the downstream end. Aft shroud section 330 may be shaped as a flared frustum that curves radially outward from the upstream end to the downstream end, such that the diameter of aft shroud section 330 increases in the downstream direction according to a radius of curvature RC.

In an embodiment, the downstream end 332 of aft shroud section 330 may be angled at an angle A2 with respect to a radial axis that is orthogonal to longitudinal axis L. Angle A2 may be between 5 and 15 degrees, and preferably between 8 and 10 degrees. As a result, aft shroud section 330 is not symmetric about the longitudinal axis L, and the length (e.g., L1) of aft shroud section 330, parallel to longitudinal axis L, is shorter on one side of longitudinal axis L than the length (e.g., L2) on an opposing side of longitudinal axis L. In particular, in an embodiment, the length L1 of the side of aft shroud section 330 that is nearest closed end 156, opposite the exit of exhaust collector 154, is shorter than the length L2 of the side of aft shroud section 330 that is nearest open end 155 and facing the exit of exhaust collector 154.

As illustrated, the length (e.g., L1) of aft shroud section 330 on one side of longitudinal axis L, closest to closed end 156, is shorter than the length (e.g., L2) of aft shroud section 330 on the opposite side of longitudinal axis L, closest to open end 155. The minimum length L1 of aft shroud section 330 may be at a point that is the maximum distance from the open end 155 of exhaust collector 154, whereas the maximum length L2 of aft shroud section 330 may be at a point that is the minimum distance from open end 155 of exhaust collector 154. Notably, the placement of the minimum length L1 at the maximum distance from open end 155 and exit of exhaust collector 154 maximizes the distance D1 between the end of aft shroud section 330 and the bottom dead center at closed end 156 of exhaust collector 154. This, in turn, maximizes the volume of space 157 at the bottom dead center, which decreases the velocity of exhaust E through exhaust collector 154 and the sizes of counterrotating vortical structures of exhaust E within exhaust collector 154. In addition, the distance D2 between hub 200 and shroud cone 300 may increase in the downstream direction along longitudinal axis L, such that the cross-sectional area (i.e., in a plane that is orthogonal to longitudinal axis L) of the annular flow path increases in the downstream direction. In this case, the cross-sectional area of the annular flow path will be greater at the outlet of exhaust diffuser 152 than at the inlet of exhaust diffuser 152.

As illustrated, aft shroud section 330 curves or flares radially outward from an upstream end to a downstream end at a radius of curvature RC. In an embodiment, the radius of curvature RC is in the range of 30 to 60 inches, and preferably in the range of 33-37 inches. However, it should be understood that the radius of curvature will depend on the size of exhaust collector 154. The radius of curvature RC may be uniform around the entirety of aft shroud section 330. Alternatively, the radius of curvature RC may be non-uniform, with a different radius of curvature on one side of longitudinal axis L than on the opposing side of longitudinal axis L.

While hub 200 and shroud cone 300 are described as comprising a plurality of sections, it should be understood that this does not imply that the sections must be manufactured separately and joined together. Rather, hub 200 may be manufactured as a single integral piece comprising all of the described sections, and/or shroud cone 300 may be manufactured as a single integral piece comprising all of the described sections. However, it may be more cost effective to manufacture hub 200 and shroud cone 300 as separate sections that are subsequently joined via any known fastening means (e.g., welding, screws, nuts and bolts, etc., to join flanges at adjacent ends of the respective sections). The manufacture of hub 200 and/or shroud cone 300 as separate sections may also facilitate the additive manufacturing of their components, including aft hub section 230 and/or shroud aft section 330.

Furthermore, hub 200 and shroud cone 300 may be manufactured from different materials and/or different sections of hub 200 and/or shroud cone 300 may be manufactured from different materials. In addition, exhaust diffuser 152 may be manufactured from different materials than exhaust collector 154. For example, the upstream portion of exhaust diffuser 152 that comprises struts 153 may be manufactured from a different material than the downstream portion of exhaust diffuser 152 and/or exhaust collector 154.

Exhaust E, which is output by turbine 140, flows from the downstream end of turbine 140 into the upstream end of the annular flow path between hub 200 and shroud cone 300. As exhaust E reaches the downstream end of the annular flow path, exhaust E is turned radially outward by the increasing diameter of aft hub section 230. Exhaust E, exiting the annular flow path near closed end 156 of exhaust collector 154, enters into space 157 at the bottom dead center, forms vortexes that proliferate around the downstream portion of hub 200 and throughout exhaust collector 154, and exits exhaust collector 154 through open end 155.

FIG. 3 illustrates a transparent view of a portion of exhaust outlet 150 down longitudinal axis L, and FIG. 4 illustrates a perspective view of exhaust outlet 150, according to an embodiment. Notably, the annular flow path 400 is formed between hub 200 and shroud cone 300, with a plurality of struts 153 extending through annular flow path 400 between hub 200 and shroud cone 300. As discussed elsewhere herein, the maximum width W of exhaust outlet 150 may be constrained by packaging engineering. For example, maximum width W may be in the range of 109 to 116 inches.

In an embodiment, the cross-sectional area of annular flow path 400, between shroud cone 300 and hub 200, increases in the downstream direction along longitudinal axis L. The increase in the cross-sectional area of annular flow path 400 may be achieved, regardless of whether the diameter of hub 200 increases, decreases, or is substantially constant along longitudinal axis L. In particular, the distance D2, between at least downstream portions of hub 200 and shroud cone 300, may increase in the downstream direction, such that the cross-sectional area of annular flow path 400 between these downstream portions increases in the downstream direction. The distance D2 may increase along the entire annular flow path 400 between hub 200 and shroud cone 300 or may increase along only a portion of annular flow path 400 (e.g., a downstream portion, including between aft shroud section 330 and hub 200). Notably, the cross-sectional area of annular flow path 400 may increase at a greater rate along certain portions of longitudinal axis L than other portions of longitudinal axis L. For example, the cross-sectional area of annular flow path 400 may increase at a faster rate between aft shroud section 330 and hub 200 than between forward shroud section 310 and hub 200, as a result of the radius of curvature RC in aft shroud section 330.

In an embodiment, the cross-sectional area of annular flow path 400 increases along the entirety of annular flow path 400 between hub 200 and shroud cone 300. However, in such an embodiment, it should be understood that, with struts 153 installed, the actual cross-sectional area of annular flow path 400 may be less, in the region of annular flow path 400 in which struts 153 are positioned, than in an upstream region of annular flow path 400, as a result of struts 153 extending through portions of the cross-sectional area. In an alternative embodiment, the cross-sectional area of annular flow path 400 may increase along only a portion of annular flow path 400 (e.g., an aft-most portion).

As illustrated, the cross-section of exhaust collector 154, cut along a plane that is orthogonal to longitudinal axis L, may have a substantially circular profile at closed end 156 and a substantially rectangular cross-section at open end 155. However, it should be understood that the cross-section of exhaust collector 154 may be implemented with a differently shaped profile than the illustrated profile.

### Industrial Applicability

Packaging engineering may prescribe a limit on a maximum width W of an exhaust collector 154 for a turbomachine, such as a gas turbine engine 100, to facilitate transportation of exhaust collector 154 in terms of cost and/or logistics. However, narrowing the maximum width W of exhaust collector 154 reduces the volume of exhaust collector 154, which reduces the efficiency of the exhaust system. Accordingly, embodiments optimize the shapes in exhaust collector 154 to compensate for the decrease in efficiency caused by the narrowing of maximum width W.

For example, in an embodiment, exhaust diffuser 152 utilizes non-cylindrical conical shapes to turn exhaust E radially outward. In particular, shroud cone 300 has a flared aft shroud section 330 to maximize the volume of space 157 at closed end 156 (e.g., bottom) of exhaust collector 154, and optimize the turning of exhaust around the circumference of hub 200. Aft shroud section 330 may have a radius of curvature RC with an optimum area ratio that minimizes the flow velocity at open end 155 (e.g., top) of exhaust collector 154 and reduces non-uniformity in the exhaust flow without flow separation. In addition, hub 200 may have an angled backwall (e.g., angle A1) that maximizes the volume within exhaust collector 154.

By maximizing volume within exhaust collector 154 and reducing velocity of exhaust E through exhaust collector 154 and the sizes of counterrotating vortical structures of exhaust E within exhaust collector 154, embodiments of exhaust diffuser 152 maximize the performance of exhaust outlet 150 despite the narrower maximum width W. In particular, the increased volume and reduced velocity in exhaust collector 154 may increase expansion through turbine 150, for example, as reflected in an increase in the pressure ratio in turbine 140 or in the ratio between the turbine inlet pressure and the exit static pressure. In turn, this can improve the overall efficiency of turbine 140, and thereby gas turbine engine 100.

It will be understood that the benefits and advantages described above may relate to one embodiment or may relate to several embodiments. Aspects described in connection with one embodiment are intended to be able to be used with the other embodiments. Any explanation in connection with one embodiment applies to similar features of the other embodiments, and elements of multiple embodiments can be combined to form other embodiments. The embodiments are not limited to those that solve any or all of the stated problems or those that have any or all of the stated benefits and advantages.

The preceding detailed description is merely exemplary in nature and is not intended to limit the invention or the application and uses of the invention. The described embodiments are not limited to usage in conjunction with a particular type of turbomachine. Hence, although the present embodiments are, for convenience of explanation, depicted and described as being implemented in a gas turbine engine, it will be appreciated that it can be implemented in various other types of turbomachines and machines with exhaust collectors, and in various other systems and environments. Furthermore, there is no intention to be bound by any theory presented in any preceding section. It is also understood that the illustrations may include exaggerated dimensions and graphical representation to better illustrate the referenced items shown, and are not considered limiting unless expressly stated as such.

## Claims

1. An exhaust diffuser (152) comprising:
a hub (200) that includes a forward hub section (210) and an aft hub section (230); and
a shroud cone (300) that includes a forward shroud section (310) and an aft shroud section (330),
wherein the shroud cone (300) encircles an upstream portion of the hub (200) to form an annular flow path (400) between the shroud cone (300) and the upstream portion of the hub (200),
wherein the aft shroud section (330) is upstream from the aft hub section (230),
wherein a diameter of the aft shroud section (330) increases in a downstream direction along a longitudinal axis (L) according to a radius of curvature (RC), such that the aft shroud section (330) flares radially outward in the downstream direction, and
wherein a cross-sectional area of the annular flow path (400) between at least the aft shroud section (330) and the hub (200) increases in the downstream direction.

2. The exhaust diffuser (152) of Claim 1, wherein the shroud cone (300) and the hub (200) are concentric around the longitudinal axis (L), and wherein the aft shroud section (330) is asymmetric around the longitudinal axis (L).

3. The exhaust diffuser (152) of Claim 2, wherein a length of the aft shroud section (330), parallel to the longitudinal axis (L), is shorter on a first side of the aft shroud section (330) than on a second side of the aft shroud section (330) that is opposite the first side across the longitudinal axis (L).

4. The exhaust diffuser (152) of Claim 3, wherein a downstream end of the aft shroud section (330) is angled, with respect to a radial axis that is orthogonal to the longitudinal axis (L), between 5 and 15 degrees.

5. The exhaust diffuser (152) of Claim 1, wherein the aft hub section (230) is asymmetric around the longitudinal axis (L), wherein a length of the aft hub section (230), parallel to the longitudinal axis (L), is shorter on a first side of the aft hub section (230) than on a second side of the aft hub section (230) that is opposite the first side across the longitudinal axis (L), and wherein the aft hub section (230) comprises an angled hub backwall (232).

6. The exhaust diffuser (152) of Claim 5, wherein the angled hub backwall (232) has an angle, with respect to a radial axis that is orthogonal to the longitudinal axis (L), between 5 and 15 degrees.

7. The exhaust diffuser (152) of Claim 1, wherein the radius of curvature (RC) is between 30 and 60 inches.

8. The exhaust diffuser (152) of Claim 1, wherein a diameter of the aft hub section (230) increases in the downstream direction.

9. An exhaust outlet (150) comprising:
an exhaust collector (154), wherein a maximum width (W) of the exhaust collector, within a plane that is orthogonal to the longitudinal axis (L), is less than or equal to 110 inches; and
the exhaust diffuser (152) of Claim 1, wherein the exhaust diffuser (152) opens into an interior of the exhaust collector (154).

10. A gas turbine engine (100) comprising:
a compressor (120);
a combustor (130) downstream from the compressor (120);
a turbine (140) downstream from the combustor (130); and
the exhaust outlet (150) of Claim 9.
